# EUROPEAN PATENT APPLICATION

(11) **EP 0 892 553 A2**
(43) Date of publication of application: **20.01.1999**
(21) Application number: 98304639.2
(22) Date of filing: 11.06.1998
(51) Int. Cl.: H04N 5/232

(54) **Monitor camera control apparatus**

(30) Priority: 18.07.1997 JP 194073/97
(71) Applicant: STAR MICRONICS CO., LTD., Shizuoka-shi, Shizuoka-ken 422-8654 (JP)
(72) Inventor: Saito, Shiro, Shizuoka-shi, Shizuoka 422-8654 (JP); Takeshita, Akihide, Shizuoka-shi, Shizuoka 422-8654 (JP)
(74) Representative: Cross, Rupert Edward Blount

(57) **Abstract**

This monitor camera control apparatus 1 is connected to a monitor camera having a camera C1 for outputting a video signal and an actuator A1 for changing the photographing direction of the camera C1 in accordance with an input control signal. This apparatus 1 includes a housing 2 having a video signal input terminal T1 for receiving a video signal and a control signal output terminal T2 for outputting a control signal, a direction control means 10, arranged on the outer surface of the housing 2, for controlling the control signal on the basis of the operation amount, and a display device 3 attached to the housing 2 so that the direction of a display screen 3a to which the video signal is output can be changed.

## Description

### BACKGROUND OF THE INVENTION

### Field of the Invention

The present invention relates to a monitor camera control apparatus for controlling a monitor camera.

### Related Background Art

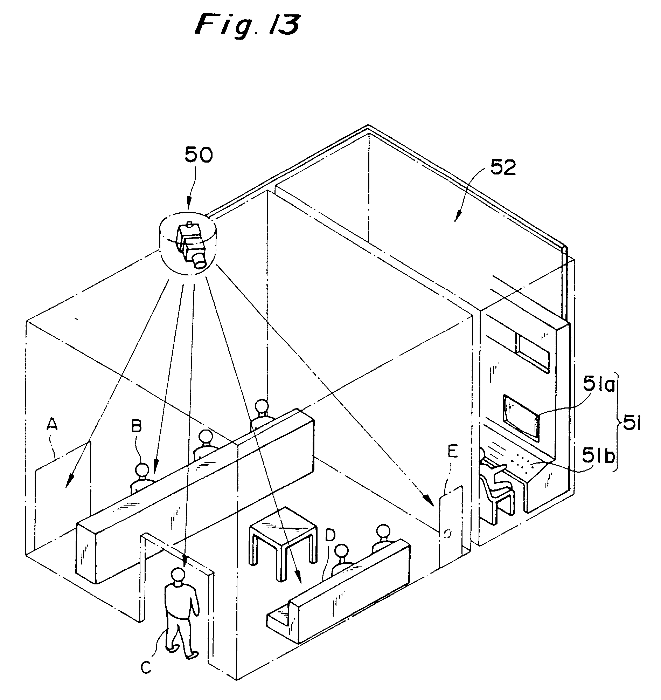

Fig. 13 shows the system arrangement of a conventional monitor camera system. The monitor camera system is constituted by a monitor camera 50, and a monitor camera control apparatus 51 connected to the monitor camera 50. The monitor camera 50 comprises a video camera for sensing the images of objects A to E, and a tilthead portion for holding the camera. Since this camera can be rotated in the pan and tilt directions by the tilthead portion, the images of the objects A to E can be sensed from an arbitrary direction. The monitor camera control apparatus 51 is arranged in an operation room 52 spaced apart from the space where the objects A to E are positioned and comprises a CRT display device 51a for displaying the image photographed with the camera, and an operation input unit 51b for controlling zooming of the camera and driving of the tilthead portion or switching the image to be displayed from the camera on the CRT display device 51a. Such a large-scale monitor camera system is disclosed in Japanese Patent Laid-Open Nos. 6-105313 and 6-165186.

### SUMMARY OF THE INVENTION

However, the above-described conventional apparatus is bulky and requires a wide space. More specifically, the manager of a small workshop sometimes need to monitor machines or operators operating in the next room without leaving his/her desk. In a small store, employees and customers must be sometimes monitored on the back of the store where no sufficient space can be ensured. Such a small-scale monitor environment can hardly use the conventional apparatus because the space for the bulky apparatus cannot be ensured.

When main units of the apparatus including a processor are arranged in a single housing, and a compact display device is used, even a small-scale monitor environment can use this apparatus. However, no sufficient convenience can be obtained only by downsizing the display device. The present invention has been made in consideration of the above situation and has as its object to provide a convenient monitor camera control apparatus.

In order to solve the above problem, according to the present invention, there is provided a monitor camera control apparatus connected to a monitor camera having a camera for outputting a video signal, and an actuator for changing a photographing direction of the camera in accordance with an input control signal, comprising a housing having a video signal input terminal for receiving the video signal and a control signal output terminal for outputting the control signal, direction control means, arranged on an outer surface of the housing, for controlling the control signal on the basis of an operation amount, and a display device attached to the housing to display a video image from the camera and change orientation of a display screen.

The monitor camera is connected to the video signal input terminal and the control signal output terminal. The direction control means such as a joystick is arranged on the outer surface of the housing. The control signal output from the control signal output terminal is controlled on the basis of the operation amount of the direction control means. The actuator of the monitor camera changes the photographing direction of the camera in accordance with the control signal. For this reason, when the direction control means is operated, the actuator is driven to change the photographing direction of the camera. The video signal output from the camera is input to the video signal input terminal of the housing. The display device has the display screen for displaying the video signal from the camera and is attached to the housing to change the direction of the display screen.

Therefore, by moving the display screen in the horizontal or vertical direction, the operator can observe the display screen while doing another operation. When the display device is constituted by, e.g., a liquid crystal display whose observation direction is limited to reduce the size of the display device, the display screen can be moved to obtain a high visibility.

The operator rarely always looks at the display screen. More specifically, when the monitor camera need not be operated or monitored, the video is to be recorded by a video tape recorder and viewed later, or the video is to be displayed on another monitor, the video need not be displayed on this display device. Hence, the control apparatus according to the present invention is characterized in that the display device has a switch arranged near the display screen to stop supply of the video signal to the display screen. This switch is used for the above-described purposes to stop supply of the video signal to the display screen, so the service life of the display screen can be prolonged. This switch is preferably arranged near the display screen to prevent an erroneous switch operation.

Various photographing conditions sometimes need be set in the monitor camera. Therefore, this control apparatus is characterized by further comprising an input switch arranged on the outer surface of the housing to control photographing conditions including switching, focusing, and zooming of the camera.

The display device is obstructive in the nonmonitoring mode or in carrying the apparatus. The control apparatus according to the present invention is characterized in that the display device is arranged on the housing to cover the input switch.

As the direction control means for operating the actuator of the monitor camera, a joystick or the like which partially projects from the outer surface of the housing is convenient to operate. However, when the display device not in use is tilted such that the display screen opposes the outer surface of the housing, the display device may interfere with the joystick and damage it. Therefore, the control apparatus according to the present invention is characterized in that the display device is attached to the housing such that the opposing display screen is spaced apart from the projected part of the direction control means.

Examples of the invention will become more fully understood from the detailed description given hereinbelow and from the accompanying drawings.
invention will become apparent to those skilled in the art from this detailed description.

### BRIEF DESCRIPTION OF THE DRAWINGS

Fig. 1 is a perspective view of a monitor camera control apparatus according to the first embodiment.

Fig. 2 is a rear view of the monitor camera control apparatus according to the first embodiment.

Fig. 3 is a view showing the system arrangement of the monitor camera control apparatus according to the first embodiment.

Fig. 4 is a perspective view of a monitor camera control apparatus according to the second embodiment.

Fig. 5 is a perspective view of the monitor camera control apparatus according to the second embodiment.

Fig. 6 is a perspective view of a monitor camera control apparatus according to the third embodiment.

Fig. 7 is a perspective view of the monitor camera control apparatus according to the third embodiment.

Fig. 8 is a perspective view of a monitor camera control apparatus according to the fourth embodiment.

Fig. 9 is a perspective view of the monitor camera control apparatus according to the fourth embodiment.

Fig. 10 is a perspective view of a monitor camera control apparatus according to the fifth embodiment.

Fig. 11 is a perspective view of a monitor camera control apparatus according to the sixth embodiment.

Fig. 12 is a perspective view of a monitor camera control apparatus according to the seventh embodiment.

Fig. 13 is an explanatory view of a conventional monitor camera system.

### DETAILED DESCRIPTION OF THE PREFERRED EMBODIMENTS

Embodiments of a monitor camera control apparatus will be described below. The same reference numerals denote the same elements or elements having the same functions throughout the drawings, and a detailed description thereof will be omitted.

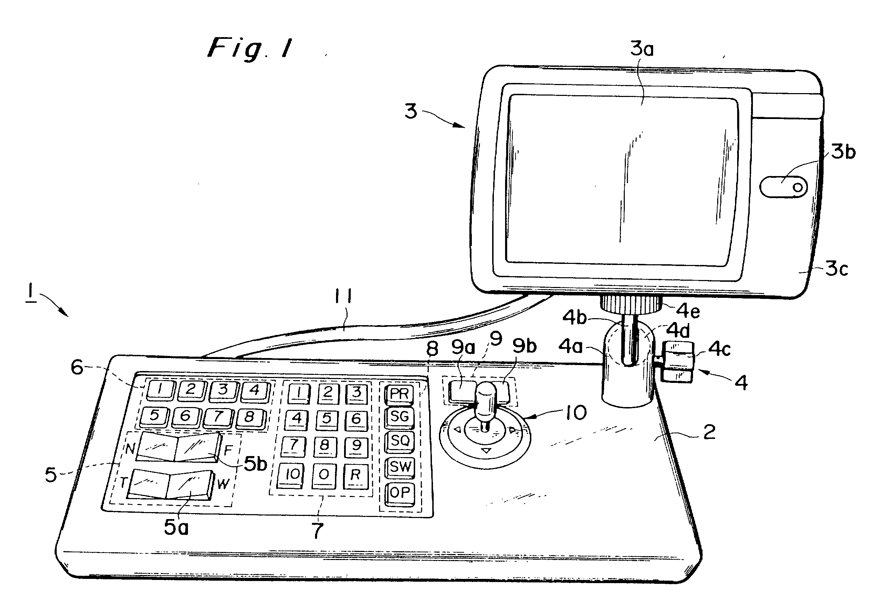

Fig. 1 is a perspective view of a monitor camera control apparatus 1 according to the first embodiment. The apparatus 1 comprises a housing 2 in a portable size, a liquid crystal display device (LCD) 3 arranged on the housing 2, and a connection mechanism 4 for attaching the display device 3 to the housing 2.

Arranged on the outer surface of the housing 2 are adjustment switches 5 having a zoom switch 5a and focus switch 5b for performing zooming and focusing of the camera, respectively, change-over switches 6 having eight buttons for switching the video from the monitor camera, a ten-key pad 7 used to input various set values, setting switches 8 having a preset button PR used to register a screen to be monitored, a swing button SG used to move the camera between two registered points, a sequence button SQ used to sequentially monitor registered positions, a switcher button SW for continuously automatically switching the camera, and an option button OP used to set the switcher time or shutter speed, and operation control switches 9 having a start button 9a and stop button 9b for starting and stopping various operations, respectively.

A joystick (direction control means) 10 for changing the photographing direction of the monitor camera is arranged on the outer surface of the housing 2. The joystick 10 partially projects from the outer surface of the housing 2.

The display device 3 is arranged on a straight line connecting the front edge center of the housing 2 and the joystick 10. Normally, the operator manipulates the joystick 10 with the right hand while being positioned at the front edge center of the housing 2. Since both the display device 3 and the joystick 10 fall within the visual field of the operator, the operator can manipulate the joystick 10 while observing the display device 3 without largely moving the eyes.

The display device 3 comprises a display screen 3a constituting the surface of the liquid crystal display device main body, a display stop switch 3b arranged near the display screen 3a, and a storage body 3c which has, on its outer surface, the display stop switch 3b and stores the liquid crystal display device main body so as to expose the display screen 3a.

The connection mechanism 4 of this embodiment comprises a tilthead. The connection mechanism 4 constituted by the free tilthead has a fixed portion 4a fixed to the housing 2 so as to project upward from the outer surface of the housing 2. The fixed portion 4a has a spherical internal space, and this space opens upward. A spherical portion 4d is arranged in the spherical space of the fixed portion 4a such that the outer surface of the spherical portion 4 slidably contacts the fixed portion inner surface which defines the space. The upper end of the spherical portion 4d is connected to one end of a support member 4b which extends upward through the open side of the space in the fixed portion 4a. The support member 4b supports the display device 3 which is detachably attached to the support member 4b through an attachment 4e fixed at the other end of the support member 4b. The spherical portion 4d is brought into tight contact with the fixed portion 4a by a wing screw 4c and fixed to the fixed portion 4a. Loosing the wing screw allows the spherical portion 4d to rotate about its center. Therefore, the display screen 3a of the display device 3 attached to the spherical portion 4d through the support member 4b can change its direction upon rotation about the center of the spherical portion 4d.

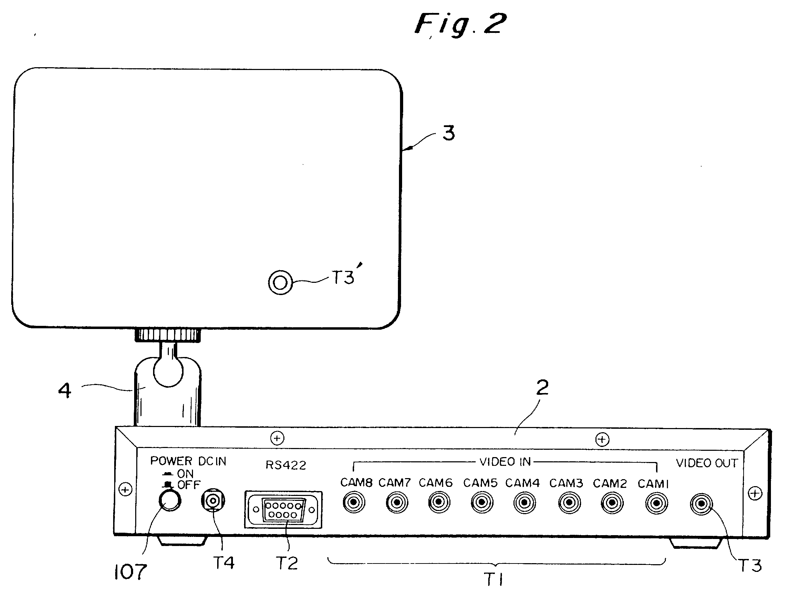

Fig. 2 is a rear view of the control apparatus 1 shown in Fig. 1. A connection cable 11 shown in Fig. 1 connects an input terminal T3' of the display device 3 to a video signal output terminal T3 arranged on the housing 2, although the connection cable 11 is not illustrated in Fig. 2 for the illustrative convenience.

Arranged on the rear surface of the housing are eight video signal input terminals T1 for receiving a video signal from the camera, a control signal input/output terminal (RS422) T2 for outputting a control signal for controlling the camera or an actuator for moving the camera or receiving position information, error information, or status information output from the camera or the actuator for moving the camera, the video signal output terminal T3 for outputting the video signal input from the video signal input terminal T1 to the display device 3, a power receiving terminal T4 as a jack connected to a DC power supply, and a power switch button 107 for ON/OFF-controlling power to be supplied to the electrical devices in the housing through the jack T4. The display device 3 has a power receiving means (not shown).

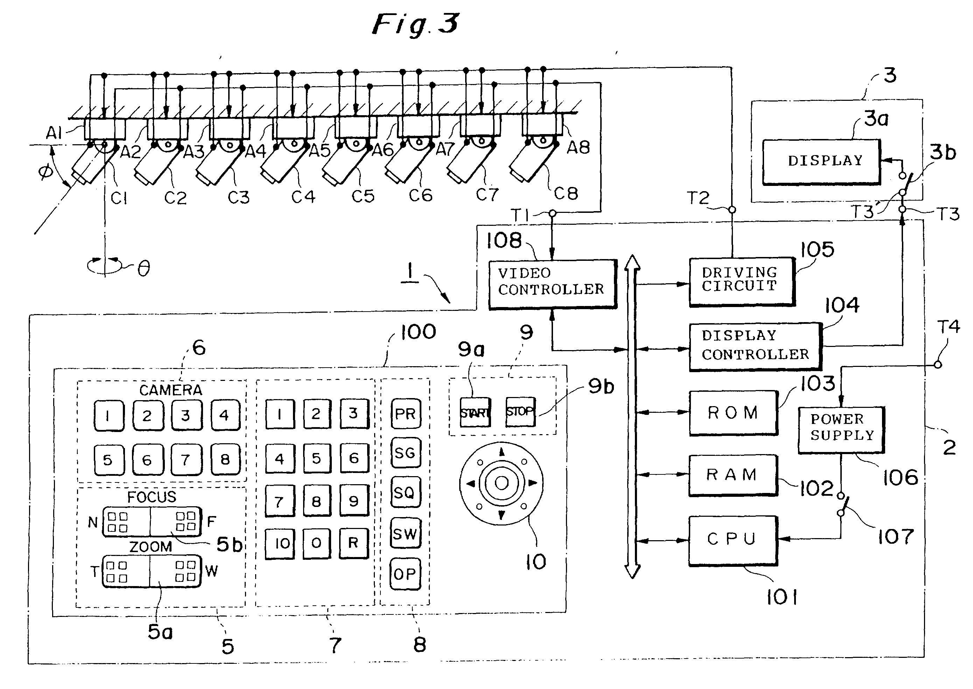

Fig. 3 shows a block diagram showing the system arrangement in which the control apparatus 1 is connected to eight monitor cameras. The monitor cameras comprise cameras C1 to C8, and actuators A1 to A8 for moving the cameras C1 to C8 in a pan direction θ having the vertical axis as the rotation axis and a tilt direction φ having the horizontal axis as the rotation axis to change the photographing directions of the cameras C1 to C8, respectively. The control apparatus 1 comprises an input unit 100 having a plurality of operating buttons and a joystick arranged on the outer surface of the housing 2, a central processing unit 101 for performing calculations to perform all control operations to be described below in accordance with the operation of the input unit 100, a volatile memory (RAM) 102 for temporarily storing numerical values used for calculation of the central processing unit 101, a nonvolatile memory (ROM) 103 storing various control programs, a display controller 104 for adjusting the frequency of a video signal to be output to the display device 3 or superimposing information input from the input unit 100 on the video signal, a driving circuit 105 for outputting a control signal on the basis of input information from the input unit 100, and a power supply 106 for adjusting power supplied from the terminal T4.

Since this apparatus incorporates a video switching controller 108, video signals from the cameras C1 to C8 are input to the apparatus through the terminal T1. Only a video signal to be output to the display device 3 is selected by the video switching controller 108 and supplied to the display device 3.

When the video is to be manually switched, one of the camera change-over switches 6 having eight buttons is depressed. With this operation, the driving circuit 105 outputs a control signal to the selected one of the cameras C1 to C8 and actuators A1 to A8 through the control signal input/output terminal. Assume that one of the change-over switches 6 is depressed to select a monitor camera having the camera C1 and the actuator A1.

A zoom switch 5a can be depressed to the left or right side. When the zoom switch 5a is depressed to the left side (T), a zoom-in control signal for the selected camera C1 is output from the terminal T2 of the driving circuit 105 and input to the monitor camera having the camera C1 and the actuator Al. When the zoom switch 5a is depressed to the right side (W), a zoom-out control signal is output and input in the same way.

A focus switch 5b can also be depressed to the left or right side. When the focus switch 5b is depressed to the left side (N), a near-focus control signal for the selected camera C1 is output from the terminal T2 of the driving circuit 105 and input to the monitor camera comprising the camera C1 and the actuator A1. When the focus switch 5b is depressed to the right side (F), a far-focus control signal is output and input in the same way.

When the camera C1 is sensing the image of an object at a predetermined position, e.g., when the camera C1 is sensing the image of the first sales counter of a department store, the photographing position can be stored in the memory 103 including zoom information and focus information by depressing the preset button PR. This apparatus can store photographing position information of 32 points per camera at maximum. When the preset button PR is depressed while the first sales counter is being photographed, and then, one button of the ten-key pad 7 is depressed, the photographing position information and the depressed number of ten-key pad 7 are stored in the memory 103 in correspondence with each other.

To move the selected camera C1 to the registered photographing position, the corresponding button of the ten-key pad 7 is depressed. Upon depressing the button of the ten-key pad 7, the photographing position information stored in the memory 103 is read out. A control signal for moving the camera C1 to the stored position is output from the terminal T2 to the actuator Al, and simultaneously, a control signal for setting the camera C1 to the stored zoom and focus positions is output from the terminal T2 to the camera C1.

The swing button SG is used to moving the camera C1 between two registered positions. First, upon depressing the swing button SG, the processing unit 101 loads a swing mode program from the memory 103 and executes the program. After the swing button SG is depressed, processing waits until the photographing position is designated from the ten-key pad 7. When two photographing positions are input from the ten-key pad 7, a control signal for moving the camera C1 between the two positions is output from the terminal T2 and supplied to the actuator A1.

The sequence button SQ is used to sequentially monitor the registered photographing positions of the camera C1. First, upon depressing the sequence button SQ, the processing unit 101 loads a sequence mode program from the memory 103 and executes the program. After the sequence button SQ is depressed, processing waits until a plurality of photographing positions are designated from the ten-key pad 7. When the sequence button SQ is depressed again after designation of a plurality of photographing positions, a control signal for moving the camera C1 to the designated photographing positions in the order of depressed buttons of the ten-key pad 7 is output from the terminal T2 and supplied to the actuator A1.

The switcher button SW is used to continuously automatically switch a number of cameras. First, upon depressing the switcher button SW, the processing unit 101 loads a switcher mode program from the memory 103 and executes the program. After the switcher button SW is depressed, processing waits until the plurality of cameras C1 to C8 are designated from buttons of the change-over switches 6. When the switcher button SW is depressed again after designation of the plurality of cameras C1 to C8, the video switching controller 108 is controlled such that video signals from the designated cameras C1 to C8 are output from the video signal output terminal T3 in the order of the depressed buttons of the change-over switches 6.

The option button OP is used to set the moving time between the image sensing positions in the sequence mode, the camera switching time in the switcher mode, and the frequency of a video signal by the display controller 104. The start and stop of the various operations are controlled by depressing the start button 9a and the stop button 9b, respectively.

The joystick 10 controls a control signal for controlling the actuator A1 in accordance with the operation amount. More specifically, when the joystick 10 is tilted from the front edge side to the rear edge side of the housing 2, a control signal for moving the camera C1 upward in the tilt direction φ is output to the actuator A1 through the terminal T2. When the joystick 10 is tilted in the reverse direction, a control signal for moving the camera C1 downward in the tilt direction φ is output to the actuator A1 through the terminal T2.

When the joystick 10 is tilted to the left side with respect to the front edge of the housing 2, a control signal for moving the camera C1 to the left side in the pan direction θ is output to the actuator A1 through the terminal T2. When the joystick 10 is tilted in the reverse direction, a control signal for moving the camera C1 to the right side in the pan direction θ is output to the actuator A1 through the terminal T2. When the joystick 10 is moved to the upper right, upper left, lower right, or lower left side with respect to the front edge of the housing 2, a control signal for moving the camera C1 to the left/right side and simultaneously upward/downward is output to the actuator Al through the terminal T2. In addition, a control signal for changing the moving speed of the camera C1 is output to the actuator A1 through the terminal T2 in accordance with the tilt angle of the joystick 10. More specifically, the camera C1 moves at a low speed when the tilt angle of the joystick 10 is small and at a high speed when the tilt angle is large.

As described above, the monitor camera control apparatus 1 of this embodiment connected to a monitor camera having the camera C1 for outputting a video signal and the actuator A1 for changing the photographing direction of the camera C1 in accordance with an input control signal, comprises the housing 2 having the video signal input terminal T1 for receiving the video signal and the control signal output terminal T2 for outputting the control signal, the direction control means 10 arranged on the outer surface of the housing 2 to control the control signal in accordance with the operation amount, and the display device 3 attached to the housing 2 so that the direction of the display screen 3a to which the video signal is output can be changed.

The display device 3 has the switch 3b arranged near the screen 3a to stop the supply of the video signal to the display screen 3a. When an another display device is to be used, or the video is being recorded by a video tape recorder or the like, only the power supply to the display device 3 can be stopped by the switch 3b. The switch 3b can also be interlocked with the main switch 107. The switch 3b may be attached to the housing 2. The video from the camera C1 can be output not only to the display device 3 but also to another device such as a video tape recorder through the video output terminal T3. At this time, the video signal supply path to the display device 3 may be directly connected to the camera C1 without intervention of the video signal output terminal T3.

This apparatus also has the input switches 5 to 8 arranged on the outer surface of the housing 2 to set photographing conditions including switching, focusing, and zooming of the cameras C1 to C8.

Power to the display device 3 may be supplied from the input terminal T3' of the display device 3 by superposing power on the video signal output from the video signal output terminal T3.

The present invention is not limited to the monitor camera control apparatus of the above embodiment, and modifications to be described below can also be made.

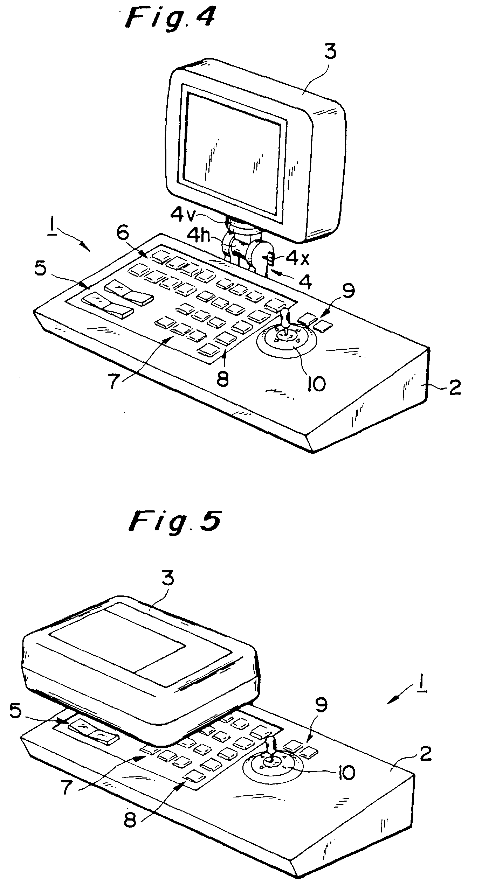

Fig. 4 shows a monitor camera control apparatus according to the second embodiment. This control apparatus has the same arrangement as that of the above-described control apparatus except the attachment position of a display device 3 and the shape of a connection mechanism 4. The display device 3 of the control apparatus of this embodiment can be tilted with respect to a housing 2 to cover input switches 5 to 8, as shown in Fig. 5. That is, the display device 3 is arranged on the housing 2 to cover the input switches 5 to 8. With this arrangement, the display device 3 is not obstructive in the nonmonitoring mode or in carrying the apparatus. The display device 3 is arranged such that the tilted display device 3 opposes the outer surface of the housing 2. At least part of a joystick 10 projects from the outer surface of the housing 2. The display device 3 is attached to the housing 2 such that when the tilted display device 3 opposing the outer surface of the housing 2 is spaced apart from the projected part of the joystick 10.

The connection mechanism 4 comprises a tilthead having a structure for allowing the display device 3 fixed to the tilthead 4 to rotate in the vertical direction about a horizontal shaft 4h extending in the horizontal direction to be parallel to the front edge of the housing 2 and, in the state shown in Fig. 4, pivot in the horizontal direction about a vertical shaft 4v extending in the vertical direction to be perpendicular to the upper surface of the housing 2. By driving a wing screw 4x arranged on the tilthead 4, the vertical movable portion 4v supporting the display device 3 can be fixed at an arbitrary position. With the tilthead 4 having this structure, the display device 3 can be changed to a desired direction and fixed in use, or fixed at a position for covering the input switches 5 to 8 not in use. In the unused state, the display device 3 also functions as a cover for the input switches 5 to 8, so the apparatus becomes compact and excellent in portability and storage properties.

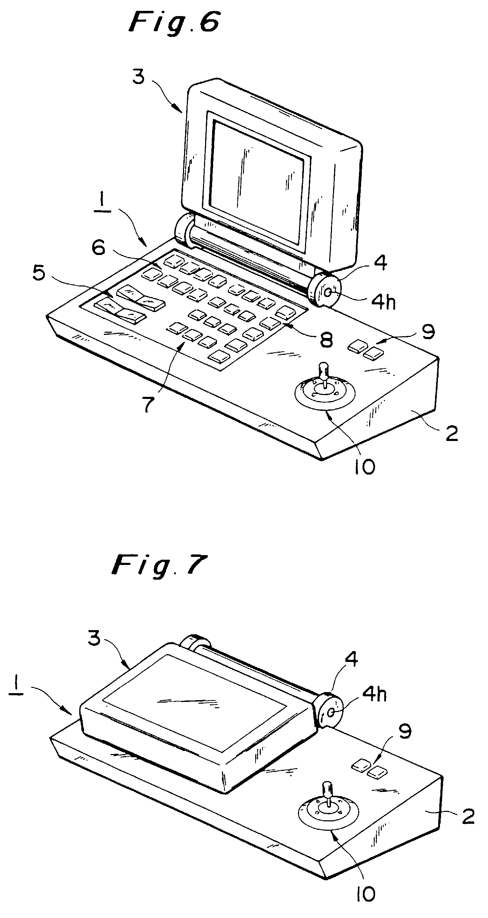

Fig. 6 shows a monitor camera control apparatus according to the third embodiment. This control apparatus has the same arrangement as that of the second embodiment except the shape of a connection mechanism 4. A display device 3 of the control apparatus of this embodiment can be tilted to oppose the outer surface of a housing 2 while covering input switches 5 to 8, as shown in Fig. 7. The display device 3 is attached to the housing 2 such that the display device 3 opposing the outer surface of the housing 2 is spaced apart from the projected part of a joystick 10. The connection mechanism (hinge) 4 of this embodiment has a horizontal shaft 4h extending in the horizontal direction at the rear edge of the housing 2, so the hinge 4 can rotate only in the vertical direction.

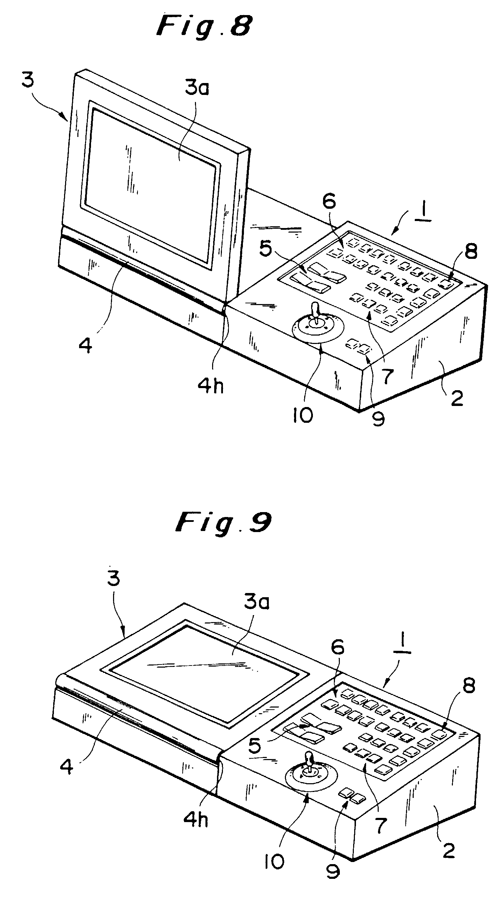

Fig. 8 shows a monitor camera control apparatus according to the fourth embodiment. This control apparatus has the same arrangement as that of the third embodiment except the positions of a connection mechanism 4 and input keys. As shown in Fig. 9, a display device 3 of the control apparatus of this embodiment can be tilted to oppose the outer surface of a housing 2 while covering the outer surface of the housing 2. When the display device 3 is tilted, a display screen 3a is positioned on the upper side. The connection mechanism (hinge) 4 of this embodiment has only a horizontal shaft 4h extending in the horizontal direction at the front edge of the housing 2, so the hinge 4 can rotate only in the vertical direction. Input switches 5 to 9 are arranged on the housing 2 not to be covered with the display device 3.

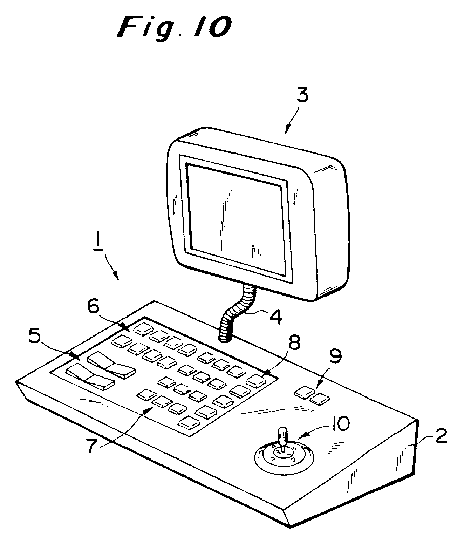

Fig. 10 shows a monitor camera control apparatus according to the fifth embodiment. This control apparatus has the same arrangement as that of the first embodiment except the shape of a connection mechanism 4. The connection mechanism comprises a flexible pipe having one end fixed to a housing 2 and the other end fixed to a display device 3. The flexible pipe 4 can freely change its shape, so the display device 3 can be set to a desired direction.

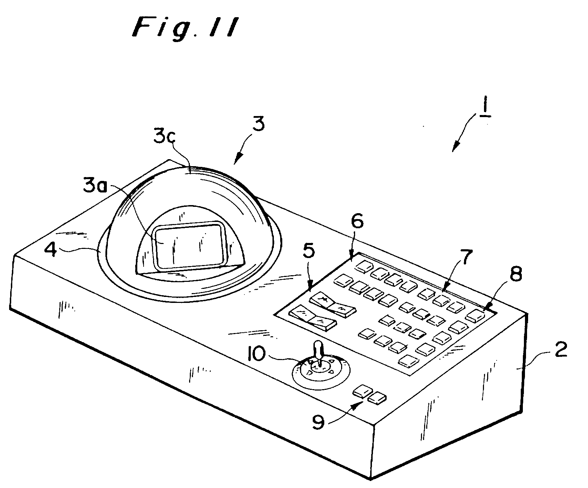

Fig. 11 shows a monitor camera control apparatus according to the sixth embodiment. This control apparatus has the same arrangement as that of the fourth embodiment except the shapes of a connection mechanism 4, a housing 2, and a display device 3. A semispherical recessed portion is formed at the left side of the housing 2. The inner surface of the recessed portion constitutes the connection mechanism 4. The semispherical portion of a substantially spherical storage body 3c slidably contacts the inner surface of the recessed portion. The display main body is arranged in the storage body 3c while exposing a display screen 3a. The direction of the display screen 3a can be freely changed.

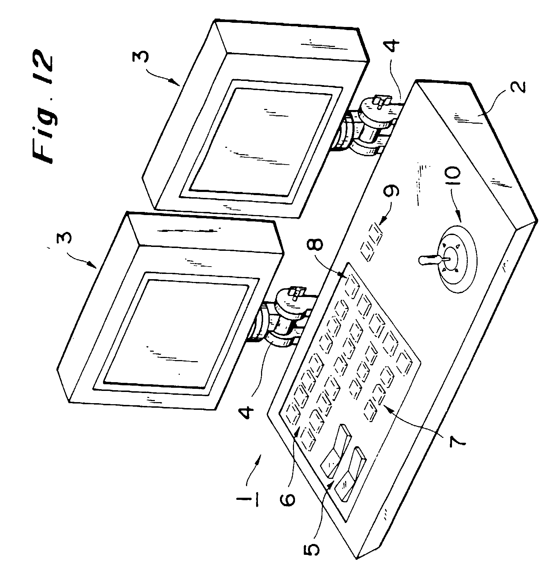

Fig. 12 shows a monitor camera control apparatus according to the seventh embodiment. This control apparatus has the same arrangement as that of the second embodiment except that two display devices 3 and two tiltheads 4 of the second embodiment are attached to the rear edge of a housing 2. In this embodiment, the display controller processes video signals from two cameras to simultaneously display the video signals.

In the above-described embodiments, a plasma display may be used as the display device 3 in place of the liquid crystal display. In addition, a backlight type display device may be used for clear view on the display.

As has been described above, since the display device has a display screen to which a video signal from a camera is output and is attached to the housing to change the direction of the display screen, a convenient monitor camera control apparatus is provided.

From the invention thus described, it will be obvious that the invention may be varied in many ways. Such variations are not to be regarded as a departure from the spirit and scope of the invention, and all such modifications as would be obvious to one skilled in the art are intended for inclusion within the scope of the following claims.

## Claims

1. A monitor camera control apparatus (1) connected to a monitor camera having a camera (C1) for outputting a video signal, and an actuator (Al) for changing a photographing direction of said camera in accordance with an input control signal, comprising:
a housing (2) having a video signal input terminal (T1) for receiving the video signal and a control signal output terminal (T2) for outputting the control signal;
direction control means (10), arranged on an outer surface of said housing, for controlling the control signal on the basis of operation of said direction control means; and
a display device(3) attached to said housing (2) so that a video image from said camera (C1) can be displayed and orientation of a display screen (3a) of said display device can be changed.

2. A monitor camera control apparatus (1) according to claim 1, characterized in that said display device (3) has a switch (3b) arranged near said display screen (3a) to interrupt the video signal to said display screen (3a).

3. A monitor camera control apparatus (1) according to claim 1, further comprising an input switch (5,6,7,8) arranged on said outer surface of said housing (2) to control photographing conditions.

4. A monitor camera control apparatus (1) according to claim 3, characterized in that said display device (3) is arranged on said housing (2) to cover said input switch (5,6,7,8).

5. A monitor camera control apparatus (1) according to claim 1,
wherein at least a part of said direction control means (10) projects from said outer surface of said housing (2),
wherein said display device (3) is attached to said housing such that said display screen (3a) opposes said outer surface of said housing (2), and
wherein said opposing display screen (3a) is spaced apart from said part of said direction control means (10).
